# EUROPEAN PATENT SPECIFICATION

(11) **EP 1 835 864 B1**
(45) Date of publication and mention of the grant of the patent: **03.08.2011**
(21) Application number: 05846501.4
(22) Date of filing: 17.11.2005
(51) Int. Cl.: A61C 7/08, A61C 9/00, B29C 51/02, B29C 69/02, A61C 13/00, A61C 13/01, A63B 71/08, B29C 51/10

(54) **PLASTIC SHEETS FOR THERMOFORMING DENTAL PRODUCTS**
KUNSTSTOFFFOLIEN ZUM THERMOFORMEN DENTALER PRODUKTE
PROCEDE DE THERMOFORMAGE DE FEUILLES PLASTIQUES DROITES ET TRANSPARENTES

(30) Priority: 17.11.2004 US 628812 P; 15.06.2005 US 153794
(43) Date of publication of application: 26.09.2007
(73) Proprietor: DENTSPLY International Inc., York, PA 17405-0872 (US)
(72) Inventor: ANDERSON, Michael, C., Palmetto, FL 34221 (US); BOZMAN, John, F., Bradenton, FL 34209 (US)
(74) Representative: Hartz, Nikolai
(86) International application number: PCT/US2005/041658
(87) International publication number: WO 2006/055700

(56) References cited:
- FR-A- 2 763 238
- US-A- 3 682 571
- US-A- 6 082 995
- US-A1- 2004 038 171
- US-B1- 6 524 101

## Description

### Background of the Invention

US-A- 6,524,101 discloses a polymer sheet for producing an appliance by thermoforming over a mold. US 2004/0038171 discloses a method of making a dental tray using a patient's teeth as a template.

Plastic sheets for dental devised have been used for decades. They are heated used an electric grid and then when lowered to the model, a vacuum draws the plastic precisely to the model of the teeth. Indications for use are indirect bonding of orthodontic appliances, orthodontic retainers, mouth guards for sports, and aligners for correcting minor malocclusions. One of the biggest drawbacks is that as that the plastic thins as it is stretched over the plaster model of the teeth causing it to fail quicker, either in occlusion or because of the vacuum force drawing so hard at the outset. This failure can cause hours of extra labor to create a new aligner, as the teeth will have moved since the last impression was taken and the model made, and the doctor or lab must go through the whole process again. Also, it delays the treatment and can lead to relapse if the patient doesn't return immediately. Generally, these sheets are made with a medical grade plastic that severely limits the range of plastic choices. It is this common problem that this patent seeks to correct.

### Description of the Background Art

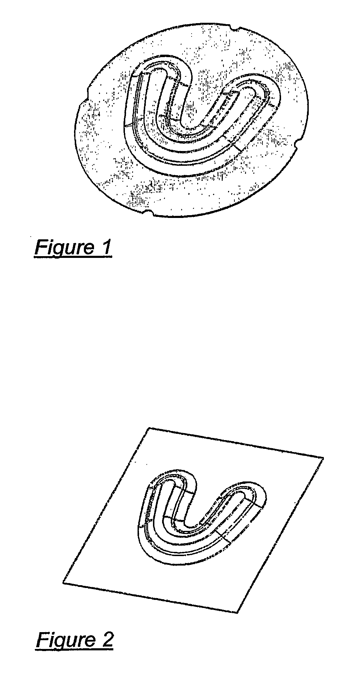

Figure 1 shows the round sheet of plastic with the three dimensional form. This form is designed to work with advanced equipment such as the BioStar or Drufamat. With even thickness and the arch partially formed, it allows less than half the distortion as flat sheets experience.

Figure 2 shows the application in a square sheet configuration design to be used with the Raintree Essix manual system thermoformer. Again, the formed target area has uniform thickness while being in 3D.

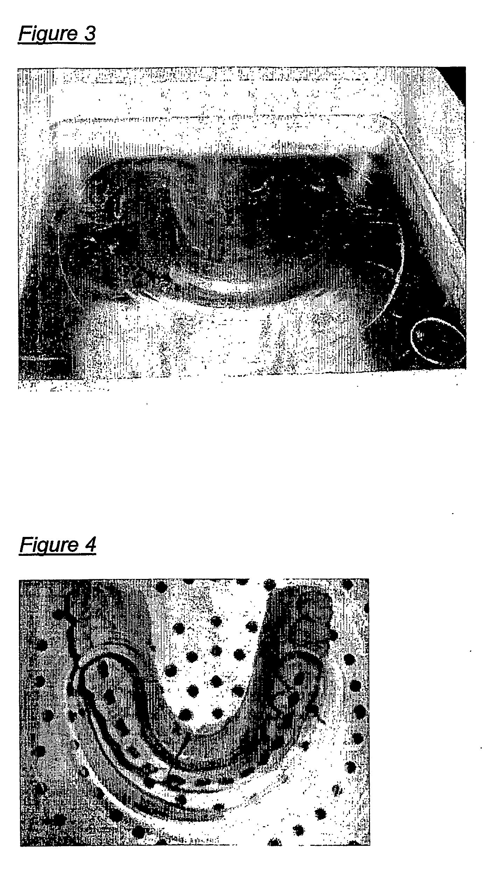

Figure 3 shows the plastic as it heated to the desired temperature. Unlike current available plastic, it flattens rather than slumps greatly reducing the stretching experience with the current sheets available and increasing its wear toughness.

Figure 4 shows the application with the application centered over the target mold for vacuum.

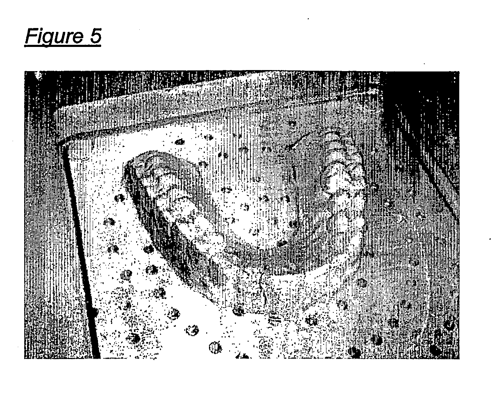

Figure 5 shows a formed tray that can be made without chill spray, reducing the cost of fabrication.

### Brief Summary of the Invention

The present invention provides a plastic sheet according to the claim.

Failed appliances have long annoyed doctors and patients and this patent proposes to eliminate most of it.

The narrow range of medical plastics eliminates use of some of the major "tough" plastics that have evolved. Rather, we propose to make the current medical grade plastics more acceptable.

This invention provides three solutions:
1. Varying the thickness in the area that is stretched over the model so that when it thins it becomes more uniform in thickness.
2. Making the plastic uniform in thickness but preforming a 3D area that partially builds in part of the area that would be stretched so that it thins much less than a flat sheet.
3. Doing both so that the average draw keeps the thickness after forming nearly uniform.

### Detailed Description of the Invention

It is known in the profession that there are two main plastics available that have good forming characteristics. One, polystyrene, has excellent clarity and stiffness but poor wear resistance. The other, polyvinylchloride (PVC) has much greater wear resistance but is cloudy after forming and less aesthetic. These are available from Raintree Essix of Metairie, LA and Great Lakes in Buffalo NY. These same companies also offer the main desktop thermoforming machines, the BioStar and the Raintree Essix. One is a digital solution and the other analog, respectively. The choice is made regarding the volume that is used.

The doctor takes an alginate impression of the patient's malocclusion. It then is filled with stone or plastic to make a positive model of the dentition. Depending on the thermoformer, a rectangular or round sheet of plastic, from 0.05 cm to 0.10 cm (.020" to .040") thick, is mounted in the chamber. The model is placed in the bed, the bottom of which is a vacuum chamber. At the top is a heating coil. When the machine has reached its ideal temperature, it heats the plastic until it slumps and then lays the slumped plastic over the model. The vacuum kicks on and pulls the plastic tight over the plaster model so it becomes a negative of the positive model. As discussed in USP (Dann patent) indicates a chill spray is used to quickly set the form so it doesn't begin to plastically deform during the cooling process.

The problem is that the plastic has deformed as much a 5.1cm (2") deep over the area where the model was, which is an area of about 17.8cm by 1.91cm (7" by ¾"). Since the plastic had a fixed thickness to start, it has thinned to as much as 50% its original thickness. Many have tried to solve this by going to the stronger PVC material but some patients are uncomfortable with its aesthetics and it doesn't have the spring of PS. Others have tried thicker original sheets but the thicker sheets lose the spring characteristic along the edges that help hold the plastic in the mouth. Also, it can be too thick in areas where there is less stretch, such as lower anteriors, and disrupt the bite, creating an overbite.

This application offers the following solutions:

This invention provides three solutions:
1. Varying the thickness in the area that is stretched over the model so that when it thins it becomes more uniform in thickness.
2. Making the plastic uniform in thickness but preforming a 3D area that partially builds in part of the area that would be stretched so that it thins much less than a flat sheet.
3. Doing both so that the average draw keeps the thickness after forming nearly uniform.

By varying the thickness to improve wear resistance; the plastic is extruded instead of rolled so that one can vary the thickness by area of the sheets. Extruding machines are known to be capable of working easily with Polystyrene plastics. The PVC would be unnecessary, as the higher translucency of Polystyrene would be most desired by the patient while the wear resistance would be ideal.

The next solution works for both plastics by creating as the sheet is extruded, a 3-D area about 1.27cm to 3.81cm (½" to 1.5") that is preformed in the shape of a wide arch so that during forming, the plastic will be stretched less than 50%. This concept has been tested at Glenroe Technologies and they have found less than 25% loss of thickness. This means a thinner plastic can be used, creating less overbite at the end of treatment and less mid-treatment emergency visits when the tray fails.

Finally, using a combined extrusion and stamping process, the first two processes can be combined to produce an ideal sheet that is thicker in the area of 3D preforming. While this process will be more expensive, it allows greater security for the professional and the patient that treatment results will be realized without failure, even if just used as a retainer. Surveys show that 25% of retainers and all activators are made this way and it is estimated that 3 million are made each year worldwide.

It is already known that an arch is between 13.97cm (5.5) and 17.78cm (7") long, that it is no more than 1.5 cm deep, and the sheet sizes for the varied machines is well documented. It is then just a matter of creating the 3D sheets in the prescribed area of the sheet where the activation will typically occur. Testing has shown that rather than slumping, the plastic will flatten when ready and hit the model at its dictated thickness.

It is anticipated that due to cost, one version will solely have the 3D affect and the other the 3D and thickness affect. It is also anticipated that the cloudy PVC will be unnecessary although it will be made available.

Many doctors form several plastic appliances at the same time should there be a failure at the onset. In a sense, much of this is futile as if it is used as an active appliance, the teeth will have moved during the term. For retainers, this is okay but eliminating this duplication can save many millions of dollars in labor and plastic.

More importantly, makers of active appliances, such as Align Technologies InvisAlign, rely on the aligners to be durable enough to make it through the phase of treatment that they have programmed. If an aligner fails, then the patient must return to the doctor, who will have to take a progress impression and model, and it will have to be sent in for a mid course correction and reanalyzed by the computers in order to make a new *complete set of trays.* Although the doctor is insured to a limited amount of corrections, it takes a lot of time and can lead to longer treatment of the patient, many times months longer. The doctor and InvisAlign cannot increase their fees so it is a loss to them, and the patient will be frustrated with the relapse and increased treatment time.

This application is limit to discomfort of failed treatment, lower the cost to doctors and labs, and promote better results and prosperity for all involved.

## Claims

1. A plastic sheet for thermoforming of dental devices by vacuum drawing the sheet over a model of the teeth,
- wherein the plastic sheet has varying thickness in the area that is to be stretched over the model so that when it thins it becomes more uniform in thickness, and
- wherein the sheet has a preformed 3D area that partially builds in part of the area to be stretched so that it thins less than a flat sheet,
**characterized in that** the sheet is made of extruded polystyrene.

## Patentansprüche

1. Plastikfolie zum Tiefziehen einer Dentalvorrichtung durch Vakuumziehen der Folie über ein Modell der Zähne,
■ wobei die Plastikfolie eine uneinheitliche Stärke in einem Bereich aufweist, der über das Modell gestreckt wird, so dass dann, wenn diese dünner wird, diese auch einheitlicher hinsichtlich der Stärke wird, und
■ wobei die Folie einen vorgeformten dreidimensionalen Bereich aufweist, der sich teilweise in den zu streckenden Bereich erstreckt, so dass dieser sich weniger verdünnt, als eine ebene Folie,
**dadurch gekennzeichnet, dass** die Folie aus extrudiertem Polystyrol aufgebaut ist.

## Revendications

1. Feuille en plastique pour le thermoformage de dispositifs dentaires par emboutissage sous vide de la feuille sur un modèle de dent,
dans laquelle la feuille en plastique a une épaisseur variable dans la zone qui doit être étirée sur le modèle de sorte que lorsqu'elle s'amincit, son épaisseur devient plus uniforme, et
dans laquelle la feuille a une zone en trois dimensions préformée qui constitue partiellement une partie de la zone à étirer de sorte qu'elle s'amincisse moins qu'une feuille plate,
**caractérisée en ce que** la feuille est réalisée en polystyrène extrudé.
